# EUROPEAN PATENT APPLICATION

(11) **EP 1 065 803 A1**
(43) Date of publication of application: **03.01.2001**
(21) Application number: 99440144.6
(22) Date of filing: 17.06.1999
(51) Int. Cl.: H04B 7/005

(54) **Transmission of transmission power control signals in a cellular telecommunication system**

(71) Applicant: ALCATEL, 75008 Paris (FR)
(72) Inventor: Buné, Paul A.M., 70806 Kornwestheim (DE)
(74) Representative: Schäfer, Wolfgang, Dipl.-Ing.

(57) **Abstract**

A method of transmitting a transmission power control (TPC) signal in a cellular telecommunication system is described wherein said control signal has the meaning "increase" or "decrease". The control signal with the meaning "increase" is transmitted with a reduced power level.

## Description

The invention relates to a method of transmitting a transmission power control signal in a cellular telecommunication system wherein said control signal may have the meaning "increase" or "decrease". The invention also relates to a transmitter for transmitting a transmission power control signal in a cellular telecommunication system wherein said control signal may have the meaning "increase" or "decrease".

In Direct Sequence Code Division Multiple Access (DS-CDMA) cellular telecommunication systems, a mobile station communicates in a macrodiversity mode with a number of base stations. As any of the base stations creates a transmission power control (TPC) signal in order to request an increase or a decrease of the power level of the CDMA signals sent by the mobile station. These TPC signals are transmitted by the respective base stations to the mobile station which receives all TPC signals at the same point in time. Therefore, when the mobile station detects one of these TPC signals, the other TPC signals are sensed as interferences by the mobile station. This may lead to errors in the detection of the TPC signals by the mobile station.

It is therefore an object of the invention to provide a method and a transmitter which ensure that the TPC signals are detected correctly.

For a method as described above, this object is solved according to the invention in that the control signal with the meaning "increase" is transmitted with a reduced power level. For a transmitter as described above, this object is solved according to the invention by means for reducing the power level of the transmission of the control signal with the meaning "increase".

If a mobile station receives at least one TPC signal with a request to decrease the power level of transmission, then - at the same point in time - the other TPC signals with an "increase" request are transmitted with a reduced power level. This has the advantage that the TPC signals of the "increase" requests are only sensed in a reduced manner as interferences by the mobile station. In other words, the "increase" requests do not interfere the "decrease" request anymore so that the "decrease" request may be detected easily by the mobile station. The invention therefore ensures that the TPC signals of the "decrease" request are detected correctly.

In an advantageous embodiment of the invention, wherein a pilot signal is transmitted in connection with the transmission power control signal, the control signal with the meaning "decrease" is transmitted with a power level which is the same as the power level of said pilot signal, and the control signal with the meaning "increase" is transmitted with a power level lower than the power level of said pilot signal. It is thereby ensured that the mobile station is able to clearly recognize the reduced power level of the TPC signals of the "increase" request by comparing the consecutive pilot signal and control signal.

In another advantageous embodiment of the invention, the control signal with the meaning "increase" is not transmitted at all. The power level is reduced to zero. In this case, the interference is as well reduced to zero. In order to recognize the "increase" request, the mobile station has to detect the gap after the pilot signal.

Further embodiments as well as further advantages of the invention are outlined in the following description of the enclosed figures.
- Figure 1: shows a schematic block diagram of an embodiment of a transmission power control method according to the invention,
- figure 2: shows a schematic block diagram of an embodiment of a telecommunication system according to the invention using the method of figure 1,
- figure 3: shows a schematic time diagram of a part of a CDMA signal including a transmission power control signal not using the invention, and
- figures 4a and 4b: show schematic time diagrams of a part of a CDMA signal including a transmission power control signal according to the invention.

In a Direct Sequence Code Division Multiple Access (DS-CDMA) cellular telecommunication system, a number of mobile stations (MS) may communicate with one and the same base station (BTS) at the same time. However, due to the different distances of the mobile stations from the base station it is possible that the power levels of the different signals transmitted from the mobile stations to the base station are also different. This has the consequence that the base station only receives those signals with the higher power level from the closer mobile station and suppresses signals with lower power levels sent from more distant mobile stations.

In order to overcome this Near/Far-Effect, transmission power control methods are used with the goal to influence all transmitted signals such that the power level of all signals is similar at the common base station.

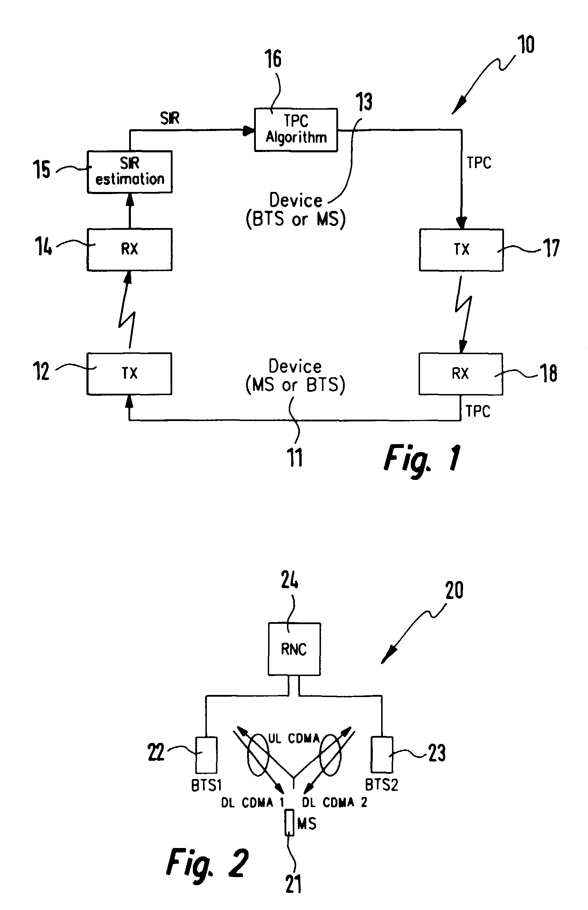

Figure 1 shows such a transmission power control method 10. A device 11 which may be a mobile station MS or a base station BTS, comprises a transmitter 12 which transmits a CDMA signal to a device 13 which may be a base station BTS or a mobile station MS. A receiver 14 of the device 13 receives the CDMA signal and a block 15 measures an actual signal-to-interference ratio (SIR) of the received CDMA signal. Then, in a block 16, the measured SIR value is used to generate a transmit power control (TPC) signal according to using a TPC algorithm. This TPC signal is then transmitted back to the device 11 by a transmitter 17 of the device 13. A receiver 18 of the device 11 receives this TPC signal. Then, the transmission power level of the device 11 is adjusted according to the received TPC signal. Depending on the TPC signal, the transmitter 12 of the device 11 will increase or decrease the power level of its transmission.

In a DS-CDMA cellular telecommunication system, one and the same mobile station may communicate with a number of base stations at the same time. In this macrodiversity mode, the mobile station is transmitting one uplink (UL) CDMA signal to the number of base stations and each of the base stations is transmitting one downlink (DL) CDMA signal to the mobile station. The number of DL CDMA signals equals the number of base stations. As already described, the respective CDMA signals contain the above mentioned TPC signal.

Figure 2 shows a telecommunication system 20 with one mobile station 21 communicating with two base stations 22, 23. The mobile station 21 transmits one UL CDMA signal to the two base stations 22, 23, the base station 22 sends a first DL CDMA 1 signal to the mobile station 21 and the other base station 23 sends a second DL CDMA 2 signal to the mobile station 21. Additionally, the two base stations 22, 23 are coupled to a radio network controller 24 in order to synchronize the two base stations 22, 23.

The two base stations 22, 23 receive the identical UL CDMA signal sent by the base station 21, whereas the mobile station 21 receives two different DL CDMA signals from the two base stations 22, 23, i.e. the DL CDMA 1 signal and the DL CDMA 2 signal at the same point in time. These two DL CDMA signals carry different TPC signals. Among others due to the differences of these TPC signals of the two CDMA signals, the mobile station 21 is able to separate the synchronously received two DL CDMA signals and to process them independently.

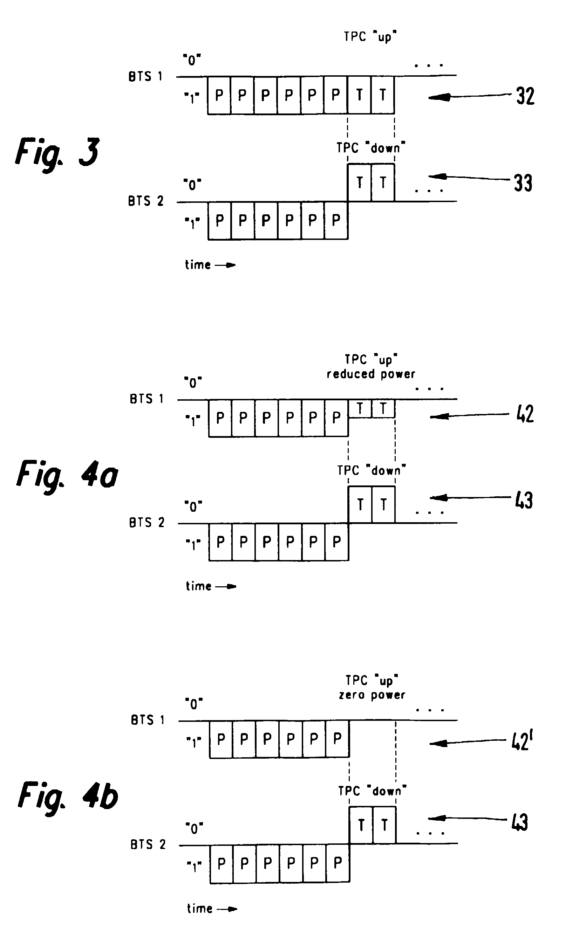

Figure 3 shows parts of two CDMA signals 32, 33 which are transmitted between the mobile station 21 and the base stations 22, 23 of figure 2 as an UL CDMA signal or as a DL CDMA signal. According to figure 3, the CDMA signals 32, 33 contain a number of pilot bits (P) and two TPC bits (T). Here, the TPC bits follow the pilot bits instantanously in time.

The TPC bits may have two meanings:
i) If both TPC bits are "1", this has the meaning that the power level should be increased, i.e. TPC "up",
ii) If both TPC bits are "0", this has the meaning that the power level should be decreased, i.e. TPC "down".

Other combinations of the TPC bits are not recognized.

It is now assumed that the mobile station 21 of figure 2 receives the upper CDMA signal 32 of figure 3 from base station 22 and the lower CDMA signal 33 of figure 3 from base station 23. As the TPC bits of the CDMA signal 32 are "1", the base station 22 is requesting the mobile station 21 to increase the power level, i.e. TPC "up", whereas the base station 23 is requesting the mobile station 21 to decrease the power level, i.e. TPC "down", due to the TPC bits of the CDMA signal 33 being "0".

The mobile station 21 compares the TPC bits of the CDMA signals from the different base stations 22, 23. The mobile station 21 increases the power level of its transmission only if all TPC bits of all base stations 22, 23 request an increase, i.e. if all TPCs are "up". In this case, all base stations 22, 23 receive too little power from the mobile station 21 and the power level has to be increased in order to uphold the communication.

However, if the mobile station 21 receives at least one TPC "down" request from one of the base stations 22, 23, the mobile station 21 does not increase the power level but decreases it. In this case, at least one of the base stations 22, 23 receives enough power from the mobile station 21 and the power level may be decreased. Insofar, a TPC "down" request has some kind of higher priority as a TPC "up" request.

According to figure 3, the base station 22 requests a TPC "up" and the base station 23 requests a TPC "down". Therefore, at least the base station 23 has a good communication with the mobile station 21 so that the power level of the mobile station 21 may be decreased.

As described, the TPC bits of the two CDMA signals sent from the two base stations 22, 23 to the mobile station 21 are either "1" or "0". As well, these TPC bits are received by the mobile station 21 at the same point in time. As a consequence, if the mobile station 21 is detecting e.g. a TPC "down" request received e.g. from base station 23, the TPC bits received synchronously from base station 22 are sensed as interferences by the mobile station 21.

In figure 4a, two CDMA signals 42, 43 are shown which correspond to the CDMA signals 32, 33 of figure 3. The only difference between these CDMA signals is the fact that the TPC bits of the TPC "up" request of the CDMA signal 42 are transmitted with a reduced power level. This means in other words that the base station 22 transmits the TPC bits of the DL CDMA 1 signal, i.e. the TPC "up" request, with a reduced power level. However, the CDMA signal 43 and in particular the TPC bits of the TPC "down" request of the CDMA signal 43 are identical with the TPC bits of the CDMA signal 33 and are therefore not transmitted with a reduced power level.

As already described, a TPC "down" request has some kind of higher priority as a TPC "up" request. As well, if the mobile station 21 receives a TPC "down" request from base station 23, the synchronously received TPC bits from the other base station 22 are sensed as interferences by the mobile station 21. However, as already described, the power level of the TPC "up" request of the CDMA signal 42 sent from base station 22 is reduced. Therefore, the interferences originating from the base station 22 and sensed by the mobile station 21 are also reduced.

The reduction of the power level of the TPC bits of the TPC "up" request is realized by respective means in the transmitter of the base station 22. With regard to figure 1, this would be the transmitter 12 or the transmitter 17.

The power level of the TPC bits of the TPC "up" request may be lower compared to the usual power level of these TPC bits, e.g. half of this usual power level. As well, it is possible that the power level of the TPC bits of the TPC "up" request may be lower compared to the previous pilot bits, e.g. half of the power level of these pilot bits. This embodiment of the TPC bits is shown in figure 4a.

Furthermore, it is possible that the power level of the TPC bits of the TPC "up" request is reduced to zero so that in fact, these TPC bits are not transmitted at all. This is shown in figure 4b within the CDMA signal 42'. In this case, no interferences originate anymore from the base station 22 sending the CDMA signal 42' with regard to the TPC "down" request sent by the base station 23.

## Claims

1. A method of transmitting a transmission power control (TPC) signal in a cellular telecommunication system (20) wherein said control signal may have the meaning "increase" or "decrease", characterized in that the control signal with the meaning "increase" is transmitted with a reduced power level.

2. The method of claim 1, wherein a pilot signal is transmitted in connection with the transmission power control (TPC) signal, characterized in that the control signal with the meaning "decrease" is transmitted with a power level which is the same as the power level of said pilot signal, and that the control signal with the meaning "increase" is transmitted with a power level lower than the power level of said pilot signal.

3. The method of claim 1, characterized in that the control signal with the meaning "increase" is not transmitted at all.

4. The method of claim 1, characterized by its use in a base station (22, 23) of said telecommunication system (20).

5. The method of claim 1, characterized by its use in a mobile station (21) of said telecommunication system (20).

6. A transmitter (12, 17) for transmitting a transmission power control (TPC) signal in a cellular telecommunication system (20) wherein said control signal may have the meaning "increase" or "decrease", characterized by means for reducing the power level of the transmission of the control signal with the meaning "increase".

7. A base station (22, 23) in said telecommunication system (20) including the transmitter (12, 17) of claim 6.

8. A mobile station (21) in said telecommunication system (20) including the transmitter (12, 17) of claim 6.

## Amended claims

### Amended claims in accordance with Rule 86(2) EPC.

**1.** A method of transmitting a transmission power control (TPC) signal in a cellular telecommunication system (20) wherein said control signal may have the meaning "increase" or "decrease", characterized in that the control signal with the meaning "increase" is transmitted with a reduced power level in order to reduce interferences.

**6.** A transmitter (12, 17) for transmitting a transmission power control (TPC) signal in a cellular telecommunication system (20) wherein said control signal may have the meaning "increase" or "decrease", characterized by means for reducing the power level of the transmission of the control signal with the meaning "increase" in order to reduce interferences.
